# EUROPÄISCHE PATENTSCHRIFT

(11) **EP 2 954 973 B1**
(45) Veröffentlichungstag und Bekanntmachung des Hinweises auf die Patenterteilung: **15.03.2017**
(21) Anmeldenummer: 15001424.9
(22) Anmeldetag: 12.05.2015
(51) Int. Cl.: B23P 19/06, B21J 5/06, B21J 15/02, F16B 25/00, F16B 25/10, B21J 15/28, B21K 25/00

(54) **VERFAHREN ZUM DIREKTVERSCHRAUBEN VON BAUTEILEN, INSBESONDERE ZUM FLIESSLOCHSCHRAUBEN SOWIE VORRICHTUNG ZUM DIREKTVERSCHRAUBEN VON BAUTEILEN**
METHOD FOR DIRECTLY SCREWING COMPONENTS, IN PARTICULAR FOR FLOW HOLE SCREWS AND DEVICE FOR DIRECTLY SCREWING COMPONENTS
PROCÉDÉ DE VISSAGE DIRECT DE COMPOSANTS, EN PARTICULIER FLUO-PERÇAGE ET DISPOSITIF DE VISSAGE DIRECT DE COMPOSANTS

(30) Priorität: 13.06.2014 DE 102014208989
(43) Veröffentlichungstag der Anmeldung: 16.12.2015
(73) Patentinhaber: DEPRAG Schulz GmbH u. Co., 92224 Amberg (DE)
(72) Erfinder: Pfeiffer, Rolf, DE - 92224 Amberg (DE); Rosenkranz, Carsten, DE - 92284 Poppenricht (DE)
(74) Vertreter: FDST Patentanwälte

(56) Entgegenhaltungen:
- DE-A1- 4 225 157
- DE-A1- 10 348 427
- DE-A1- 19 911 308
- DE-A1-102011 109 815
- DE-A1-102012 215 905

## Beschreibung

Die Erfindung betrifft ein Verfahren zum Direktverschrauben von Bauteilen, insbesondere zum Fließlochschrauben, mit den Merkmalen des Oberbegriffs des Patentanspruchs 1 sowie weiterhin eine Vorrichtung zum Direktverschrauben von Bauteilen mit den Merkmalen des Oberbegriffs des Patentanspruchs 13.

Ein derartiges Verfahren zum Fließlochschrauben ist beispielsweise zu entnehmen aus der DE 103 48 427 A1. Beim Fließlochschrauben werden zwei Bauteile mittels einer Verschraubung miteinander ohne Vorlochen miteinander verschraubt. In einem ersten Prozessabschnitt wird hierbei in dem Bauteil spanlos ein Loch erzeugt und anschließend wird in einem zweiten Prozessabschnitt in das erzeugte Loch ein Gewinde eingeformt. Beide Prozessabschnitte erfolgen hierbei mit einer Fließlochschraube, mit der also zunächst das Loch spanlos erzeugt wird und anschließend das Gewinde eingeformt wird. Schließlich dient die Fließlochschraube auch gleich dazu, die beiden Bauteile über eine Schraubverbindung in einem dritten Prozessabschnitt miteinander zu verbinden. Für den Fließlochschraubvorgang wird dabei die Fließlochschraube in eine Drehbewegung versetzt und mit Hilfe eines Vorschubantriebs in Axialrichtung mit vorgegebener Vorschubkraft versetzt.

Die Fließlochschraube weist üblicherweise eine konische Spitze auf. Beim Lochformvorgang im ersten Prozessabschnitt wird durch eine hohe Drehzahl sowie eine hohe Vorschubkraft das Bauteil durch die Fließlochschraube an der vorgesehenen Lochposition zunächst erwärmt und anschließend plastisch verformt. Nach dem Lochformvorgang dringt die Fließlochschraube weiter ein und formt mit ihrem Schraubengewinde das Gewinde in das zuvor geformte Loch ein. Für den Gewindeformvorgang im zweiten Prozessabschnitt wird üblicherweise die Drehzahl der Fließlochschraube verringert. Im ersten Prozessabschnitt, bei dem durch die Erwärmung eine plastische Verformung der Bauteile erfolgt, werden gemäß der DE 103 48 427 A1 Drehzahlen im Bereich von 1000 bis 5000 1/min und Vorschub- bzw. Andruckkräfte im Bereich zwischen 0,3 bis 1,5 kN realisiert.

Bei der DE 103 48 427 A1 ist darüber hinaus vorgesehen, dass die Bauteile während des Verschraubens durch eine Niederhaltekraft aneinander gedrückt werden, welche beispielsweise pneumatisch oder auch durch Federn aufgebracht wird. Zusätzlich wirkt mittels einer Schraubspindel eine Vorschubkraft auf die Fließlochschraube.

Aus der DE 199 11 308 A1 ist eine weitere Vorrichtung zum Fließlochfurchen beschrieben. Hierbei wird ein einziges Werkzeug eingesetzt, welches für die Lochoperation auf einen langsameren Vorschub gesteuert ist im Vergleich zum anschließenden Gewindeformen. Mittels einer wendelförmigen Druckfeder wird hierbei ein Anpressdruck erzeugt.

Auf dem Markt befindliche Systeme zeichnen sich im Hinblick auf die Erzeugung der Vorschubkraft durch pneumatische Systeme aus, mittels derer die Vorschubkraft pneumatisch erzeugt und auf die Schrauberwelle übertragen wird.

Das Fließlochschrauben findet zusehends Verwendung auch in der Kraftfahrzeugindustrie. Hierbei ist insbesondere eine hohe Taktrate bei gleichzeitig hoher Prozesssicherheit gefordert. Als problematisch hat sich insbesondere das Umschalten zwischen dem ersten Prozessabschnitt der Lochformung auf den zweiten Prozessabschnitt des Gewindeformens herausgestellt.

Neben dem Fließlochschrauben ist als weitere Direktverschraubung noch ein Bohrschrauben bekannt, bei dem das Loch im ersten Prozessabschnitt mit Hilfe einer Bohrschraube durch Bohren, also spanend erzeugt wird und anschließend im zweiten Prozessabschnitt - wie beim Fließlochschrauben auch - ein Gewinde eingeformt wird. Unter Direktverschraubung wird allgemein ein Prozess verstanden, bei dem der Lochformvorgang und der Schraubvorgang in einem gemeinsamen Schraubvorgang mit einem Schraubelement erfolgt, welches auch zur Erzeugung des Durchzugs im Bauteil mit Einformung des Gewindes ausgebildet ist.

Ausgehend hiervon liegt der Erfindung die Aufgabe zugrunde, ein prozesssicheres Direktverschrauben, insbesondere Fließlochschrauben mit hoher Taktrate zuverlässig zu gewährleisten.

Die Aufgabe wird erfindungsgemäß gelöst durch ein Verfahren zum Direktverschrauben, insbesondere zum Fließlochschrauben mit den Merkmalen des Patentanspruchs 1 sowie durch eine Vorrichtung zum Direktverschrauben, insbesondere zum Fließlochschrauben mit den Merkmalen des Patentanspruchs 15.

Bei dem Verfahren wird in einem ersten Prozessabschnitt in einem Bauteil ein Loch mit Hilfe eines Schraubelements, nämlich eine Fließlochschraube oder eine Bohrschraube, erzeugt und in einem zweiten Prozessabschnitt wird in das erzeugte Loch mit Hilfe der Fließlochschraube bzw. der Bohrschraube ein Gewinde eingeformt. Hierzu wird allgemein mit Hilfe eines Vorschubantriebs ein Vorschub sowie eine Vorschubkraft oder auch Anpresskraft erzeugt und auf eine Schrauberwelle übertragen. Am vorderen Ende der Schrauberwelle ist das Schraubelement gehalten. Im ersten Prozessabschnitt des Lochformens wird für die Drehbewegung der Schrauberwelle eine hohe Drehzahl und mittels des Vorschubantriebs eine hohe Vorschubkraft eingestellt. Bei einem definierten Umschaltpunkt beim Durchdringen des Bauteils wird anschließend in den zweiten Prozessabschnitt umgeschaltet und dabei eine geringere Vorschubkraft und eine geringere Drehzahl eingestellt. Um eine möglichst schnelle Umschaltung prozesssicher zu gewährleisten, ist nunmehr vorgesehen, dass die Vorschubkraft mittels eines nicht pneumatischen Vorschubantriebs erzeugt wird und dass weiterhin ein zur Vorschubkraft korrelierter Antriebsparameter des Vorschubantriebs überwacht wird und eine charakteristische Änderung des Werts dieses Antriebsparameters den Umschaltpunkt definiert, ab dem also auf die geringere Vorschubkraft und die geringere Drehzahl umgeschalten wird.

Dieser Ausgestaltung liegt die Überlegung zugrunde, dass das Umschalten extrem zeitkritisch ist, da nach dem Ende des Lochformvorgangs noch die - insbesondere beim Fließlochformen - hohe Drehzahl sowie die hohe Vorschubkraft anliegt und dass bei Beibehaltung dieser Prozessparameter die Gefahr des Beschädigens der Gewindegänge des Schraubelements, insbesondere der Fließlochschraube besteht, wenn diese also mit hoher Kraft und/oder hoher Vorschubgeschwindigkeit gegen das Bauteil verfährt. Dies kann schließlich dazu führen, dass das Gewinde nicht oder nur unzureichend ausgeformt wird und insgesamt die Bauteilverbindung nicht den geforderten Qualitätsansprüchen genügt. Durch den abrupten Wegfall der Gegenkraft nach dem Durchdringen des Bauteils steigt nämlich üblicherweise die Vorschubgeschwindigkeit nicht kontrollierbar an. Das Gewinde des Schraubelements prallt daher häufig mit hoher Geschwindigkeit auf das zuvor geformte Loch.

Um ein zuverlässiges Umschalten zu gewährleisten ist nunmehr eine Überwachung der auf das Schraubelement aufgebrachten Vorschubkraft vorgesehen. Hierzu wird ein mit der Vorschubkraft zumindest korrelierter Parameter erfasst und überwacht. Der Parameter kann grundsätzlich auch die Vorschubkraft selbst sein, die also in diesem Fall direkt überwacht wird. Bevorzugt handelt es sich bei dem Parameter jedoch lediglich um einen zur Vorschubkraft korrelierten Parameter, also um eine Größe, die mittelbar die Vorschubkraft definiert. Durch die zumindest mittelbare Überwachung der Vorschubkraft ist ein genau definiertes und zuverlässiges Umschaltkriterium gegeben, das ein ausreichend schnelles Umschalten erlaubt.

Hierbei geht die Erfindung weiterhin von der Überlegung aus, dass bei der Verwendung von heute üblicherweise eingesetzten pneumatischen Vorschubantrieben diese eine ausreichend schnelle Umschaltung nicht erlauben. Aufgrund der Kompressibilität der Luft bei einem Pneumatikantrieb ist mit einem derartigen Pneumatikantrieb keine definierte schnelle Absenkung der Vorschubkraft und der Vorschubgeschwindigkeit, also kein ausreichend schnelles Umschalten ermöglicht.

Zur Bestimmung des Umschaltpunktes wird wahlweise ein Umschalt-Wert des Parameters vorgegeben, bei dessen Erreichen (bzw. Unter- oder Überschreitung) die Umschaltung erfolgt. Alternativ oder ergänzend wird eine charakteristische Änderung des Werts als Umschaltkriterium herangezogen.

Durch die hier beschriebene Lösung ist daher zuverlässig und prozesssicher ein sofortiges Umschalten am Ende des Lochformvorgangs und vor Beginn des Gewindeformvorgangs gewährleistet.

Bevorzugt erfolgt das Umschalten dabei unmittelbar nach dem Durchdringen des Bauteils und zeitlich vor Beginn des Gewindeformvorgangs. Dadurch ist zuverlässig eine Beschädigung des Gewindes ausgeschlossen. Hierbei wird ausgenutzt, dass bereits beim Durchdringen, wenn also die Spitze des Schraubelements erstmalig aus der Unterseite des Bauteils hervortritt, ein deutlicher Abfall der Vorschubkraft erfolgt. Bereits zu diesem frühestmöglichen Zeitpunkt erfolgt daher die Umschaltung.

Nach der Umschaltung wird vorzugsweise noch der sogenannte Durchzug geformt, d.h. es erfolgt die im wesentlichen zylindrische Ausbildung des Loches. Wegen der üblicherweise konisch zulaufenden Spitze des Schraubelementes ist diese Formung des zylindrischen Durchzugs erforderlich. Erst anschließend beginnt der Gewindeformvorgang. Zwischen dem Umschalten und dem Gewindeformen ist daher ein Teilprozessschritt integriert, so dass ein ausreichender zeitlicher Abstand gewährleistet ist, bis das Gewinde auf die Bauteiloberfläche auftrifft. Dies gewährleistet, dass der Umschaltvorgang abgeschlossen ist und bereits die geringere Vorschubkraft und die geringere Drehzahl eingestellt sind.

Gemäß einer bevorzugten Ausgestaltung wird als Parameter ein zur Vorschubkraft korrelierter Parameter, insbesondere ein Antriebsparameter des Vorschubantriebs überwacht. Diese Ausgestaltung geht von der Überlegung aus, einen Antriebsparameter des Vorschubantriebs zu überwachen, da anhand eines solchen frühzeitig und zugleich zuverlässig Zustandsänderungen beim Lochformvorgang erkannt werden.

Unter dem Begriff "zur Vorschubkraft korrelierter Antriebsparameter" wird dabei insbesondere ein eingangsseitiger Parameter des Vorschubantriebs verstanden, mit dem dieser versorgt wird und über den mittelbar die aktuell erzeugte Vorschubkraft definiert ist. Der eingangsseitige Antriebsparameter ist dabei üblicherweise eine Kenngröße für die Leistungsaufnahme des Antriebs. Bei dem Parameter handelt es sich daher üblicherweise nicht um einen abtriebsseitigen Parameter. Insbesondere handelt es sich dabei nicht um die den Vorschub direkt charakterisierenden Größen, nämlich die erzeugte Vorschubkraft oder die erzeugte Vorschubgeschwindigkeit. Es erfolgt daher insbesondere keine direkte Kraftmessung der erzeugten Vorschubkraft. Durch die Verwendung von eingangsseitigen Parametern werden Zustandsänderungen frühzeitig erkannt.

In besonders zweckdienlicher Ausgestaltung weist der Vorschubantrieb dabei einen Elektromotor, insbesondere einen bürstenlosen Gleichstrommotor auf. Über den Elektromotor wird also der Vorschub sowie die Vorschubkraft erzeugt. Im Vergleich zu einem pneumatischen Antrieb weist ein derartiger Elektromotor eine gute Steuerbarkeit und eine hohe Umschaltgeschwindigkeit zwischen unterschiedlichen Betriebszuständen auf.

Alternativ zu einem Elektromotor wird in vorteilhafter Weise ein Hydraulikmotor zur Erzeugung der Vorschubkraft und des Vorschubs eingesetzt. Aufgrund der Inkompressibilität der eingesetzten Hydraulikflüssigkeit ist - anders als bei einem Pneumatikantrieb - auch bei diesem ein sehr schnelles Umschalten ermöglicht.

In beiden Fällen wird als charakteristische Änderung insbesondere ein Abfall des Werts eines Antriebsparameters ausgewertet. Dies beruht grundsätzlich auf der Überlegung, dass für den Lochformvorgang hohe Kräfte aufgrund des Widerstands des Bauteils ausgeübt werden. Bereits bei dem Durchdringen der Bauteile, wenn also die Spitze des Schraubelements die Unterseite des Bauteils durchstößt, lässt die Gegenkraft vergleichsweise abrupt nach, was sich eben in einem charakteristischen Abfall des eingangsseitigen Antriebsparameters des Vorschubantriebs äußert. Alternativ kann der Parameter auch auf ein Unterschreiten eines vorgegebenen Grenz- oder Umschaltwertes überwacht werden.

Als Antriebsparameter, welcher überwacht wird, wird im Falle des Elektromotors vorzugsweise eine Motorkenngröße, insbesondere der Motorstrom oder eine zum Motorstrom korrelierte Größe überwacht. Dies könnte beispielsweise auch die Drehzahl oder das Drehmoment des Elektromotors des Vorschubantriebs sein.

Im Falle eines Hydraulikmotors wird der Druck innerhalb einer Hydraulikeinheit als Antriebsparameter überwacht, über den die Vorschubkraft erzeugt wird.

Ein besonderer Vorteil bei der Verwendung eines Elektromotors und der Überwachung des Motorstroms ist die frühzeitige Erkennung einer Änderung des Motorstroms. Insbesondere wurde festgestellt, dass bereits zum Ende des Lochformvorgangs, nämlich beim Ein- und Durchdringen der Fließlochschraube durch die Bauteile nach Abschluss des Erwärmvorgangs ein charakteristischer Abfall des Motorstroms detektierbar ist, welcher also bereits das endgültige Durchdringen ankündigt.

Um zuverlässig eine Beschädigung des Gewindes nach dem Lochformvorgang zu vermeiden, ist in zweckdienlicher Ausgestaltung für den Vorschubantrieb eine maximale Vorschubgeschwindigkeit als Begrenzung vorgegeben. Dadurch ist gewährleistet, dass - unabhängig von einem Umschalten - der Vorschubantrieb mit einer maximalen Geschwindigkeit verfährt. Selbst wenn also der Lochformvorgang beendet ist und damit die Gegenkraft entfällt, was üblicherweise zu einem abrupten Geschwindigkeitsanstieg der Vorschubbewegung führen würde, läuft der Vorschubantrieb sofort in eine Geschwindigkeitsbegrenzung. Auch hier ist wieder von entscheidender Bedeutung, dass es sich um einen nicht pneumatischen Antrieb handelt, da andernfalls eine derartige Begrenzung für den vorgesehenen Anwendungsfall nicht möglich wäre.

In zweckdienlicher Weiterbildung ist weiterhin für den Vorschubantrieb eine maximale Vorschubkraft als Begrenzung vorgegeben. Dies ist insbesondere beim Lochformvorgang von Bedeutung, um also insgesamt die ausgeübte Kraft zu begrenzen. Im Falle der Verwendung eines Elektromotors für den Vorschubantrieb erfolgt dies durch eine Begrenzung der Stromaufnahme des Elektromotors.

Diese maximale Vorschubkraft oder auch die maximale Vorschubgeschwindigkeit sind dabei vorzugsweise parametrierbar, d.h. sie sind durch den Benutzer einstellbar, welcher die Vorrichtung für das Fließlochschrauben beispielsweise am Produktionsband steuert. Diese Einstellung erfolgt dabei vorzugsweise durch eine softwaretechnische Ansteuerung. Alternativ können auch andere Einstellelemente, wie Einstellknöpfe etc. vorgesehen sein.

In besonders zweckdienlicher Weiterbildung wird während eines Fließlochschraubvorgangs unter definierten Voraussetzungen mehrfach zwischen dem ersten und dem zweiten Prozessabschnitt umgeschaltet. Dieser Ausgestaltung liegt dabei die Überlegung zugrunde, dass zwischen den beiden zu verbindenden Bauteilen häufig Spalte oder auch Zwischenschichten, beispielsweise Klebschichten vorliegen. Beim Lochformvorgang führt dies schließlich dazu, dass nach dem Durchdringen des ersten Bauteils die Gegenkraft abrupt abnimmt, ohne dass jedoch der Prozess beendet ist, da noch das zweite Bauteil durchdrungen werden muss. Die entsprechende Ansteuerlogik ist daher derart ausgebildet, dass sie eine anschließende Zunahme des Werts des überwachten Parameters wieder erkennt, wenn also die Fließlochschraube auf das zweite Bauteil auftrifft. In diesem Fall wird wieder auf die hohe Vorschubkraft und die hohe Drehzahl umgeschaltet.

Als weiterer Umschaltpunkt für das erneute Umschalten in den ersten Prozessabschnitt wird dabei zweckdienlicherweise ein charakteristischer Anstieg der Vorschubkraft herangezogen. Hierzu wird wiederum bevorzugt der zur Vorschubkraft korrelierte Parameter, insbesondere der Motorstrom überwacht und ausgewertet. Insgesamt ist dadurch der gesamte Prozessvorgang an eine jeweilige vorliegende aktuelle Situation adaptiv angepasst. Über die hinterlegte Steuerlogik werden derartige besondere Situationen, wie eben beispielsweise über eine Klebeschicht miteinander verbundene Bauteile, ebenfalls zuverlässig, prozesssicher und mit hoher Geschwindigkeit bearbeitet.

Für die Erzeugung der Drehbewegung der Schrauberwelle ist in zweckdienlicher Ausgestaltung ein zusätzlicher Schrauberantrieb vorgesehen, welcher also neben dem Vorschubantrieb angeordnet ist. Über den Schrauberantrieb wird dabei die Rotationsbewegung der Schrauberwelle erzeugt und in geeigneter Weise auf diese übertragen. Demgegenüber wird über den Vorschubantrieb alleine der axiale Vorschub der Schrauberwelle sowie die auf die Schrauberwelle und damit auch auf das Schraubelement, insbesondere auf die Fließlochschraube übertragene Vorschubkraft erzeugt und übertragen.

Zweckdienlicherweise handelt es sich bei dem Schrauberantrieb dabei um einen zweiten Elektromotor, welcher zusätzlich für einen gesteuerten Schraubvorgang ausgebildet ist. Bei dem Schrauberantrieb handelt es sich daher insgesamt um einen ansteuerbaren, spezialisierten Schraubantrieb. Dieser umfasst in an sich bekannter Weise wahlweise oder auch in Kombination eine Drehmomentsteuerung, eine Drehwinkelsteuerung sowie verschiedene hinterlegte Prozessalgorithmen, um unterschiedliche Schraub- und Anzugsverfahren mit dem gleichen Elektromotor ausüben zu können. Dieser Elektromotor im Schrauberantrieb ist dabei wiederum vorzugsweise parametrierbar Eine Überwachung der Antriebsparameter des Schrauberantriebs im Hinblick auf den Umschaltpunkt erfolgt vorzugsweise nicht. Über den Schrauberantrieb wird lediglich zwischen der hohen Drehzahl beim Lochformvorgang und der niedrigen Drehzahl beim Gewindeformen umgeschaltet. Die Überwachung des Schraubantriebs ist insbesondere für den nach dem Gewindeformvorgang sich noch anschließenden dritten Prozessabschnitt, dem sogenannten Endanzug des Schraubelements erforderlich. Bei diesem wird das Schraubelement zum Verschrauben der beiden Bauteile in das zuvor geformte Gewinde ein- und festgeschraubt. Der Festsitz des Schraubelements und damit das Ende des Schraubvorgangs wird in diesem Fall beispielsweise durch eine Drehmomentüberwachung realisiert.

In zweckdienlicher Ausgestaltung wird bei dem Fließlochschraubvorgang im ersten Prozessabschnitt eine Vorschubkraft von größer 1000N und eine Drehzahl für die Schrauberwelle im Bereich von 5000 U/min bis 8000 U/min erzeugt. Im zweiten Prozessabschnitt wird dann zweckdienlicherweise eine Vorschubkraft im Bereich von lediglich bis 500N sowie eine Drehzahl im Bereich von etwa 500 bis 2500 U/min eingestellt.

Die im Hinblick auf das Verfahren angeführten Vorteile und bevorzugten Ausgestaltungen sind sinngemäß auch auf die erfindungsgemäße Vorrichtung zu übertragen. Bei der Vorrichtung handelt es sich typischerweise um eine automatische, nicht handgeführte Vorrichtung. Die Vorrichtung ist dabei an einer Maschine und insbesondere an einem Roboterarm befestigt und wird automatisiert von der Maschine bzw. dem Roboterarm geführt. Es handelt sich daher insbesondere um ein robotergeführtes System.

Ein Ausführungsbeispiel der Erfindung wird nachfolgend anhand der Figuren näher erläutert. Diese zeigen:
- Fig. 1: in einer schematischen und stark vereinfachten Darstellung eine Vorrichtung zum Fließlochschrauben,
- Fig. 2A: den schematisierten Verlauf von Drehzahl und Drehmoment des Schrauberantriebs während des Fließlochschraubvorgangs sowie
- Fig. 2B: den schematisierten Verlauf der Drehzahl und des Motorstroms des Vorschubantriebs während des Fließlochschraubvorgangs.

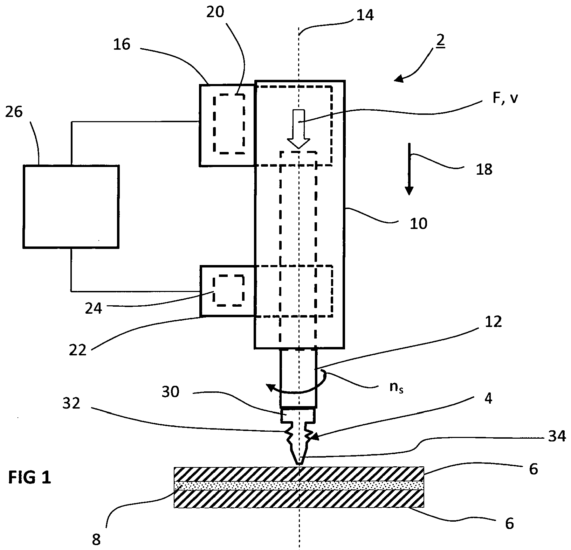

Die in Fig. 1 dargestellte Vorrichtung 2 dient zur Durchführung eines Fließlochschraubvorgangs. Bei diesem wird eine so genannte Fließlochschraube 4 in zumindest ein Bauteil 6 eingefügt. Im Ausführungsbeispiel sind zwei miteinander über die Fließlochschraube 4 zu verbindende Bauteile 6 dargestellt, welche ergänzend über eine Klebschicht 8 miteinander verbunden sind.

Die Vorrichtung 2 umfasst eine Halterung 10, die beispielsweise nach Art eines Gehäuses ausgebildet ist. Innerhalb der Halterung 10 ist eine Schrauberwelle 12 um eine Drehachse 14 drehbar gelagert. Die Vorrichtung 2 umfasst weiterhin einen Vorschubantrieb 16 zur Erzeugung einer Vorschubbewegung in Axialrichtung 18 sowie zur Erzeugung einer Vorschubkraft F. Die Vorschubkraft F sowie die Vorschubbewegung werden dabei auf die Schrauberwelle 12 übertragen. Über den Vorschubantrieb 16 wird eine Vorschubgeschwindigkeit v auf die Schrauberwelle 12 übertragen, mit der diese also in Axialrichtung 18 versetzt wird.

Der Vorschubantrieb 16 weist einen ersten Elektromotor 20 auf, mit Hilfe dessen die Vorschubkraft F sowie die Vorschubgeschwindigkeit v erzeugt werden. Über geeignete weitere, hier nicht näher dargestellte Antriebskomponenten werden diese Antriebsgrößen auf die Schrauberwelle 12 übertragen.

Die Vorrichtung 2 umfasst weiterhin einen Schrauberantrieb 22, welcher die Schrauberwelle 12 in Drehbewegung um die Drehachse 14 versetzt. Der Schrauberantrieb 22 weist dabei einen zweiten Elektromotor 24 auf, dessen Abtrieb wiederum über hier nicht näher dargestellte Komponenten des Schrauberantriebs 22 zur Erzeugung der Drehbewegung mit der Schrauberwelle 12 verbunden sind.

Weiterhin umfasst die Vorrichtung eine Steuereinheit 26 zur Steuerung des Fließlochschraubvorgangs. Die Steuereinheit 26 gibt dabei Steuersignale an die beiden Antriebe 16,22 ab.

Beim Fließlochschraubvorgang wird in einem ersten Prozessabschnitt I in den Bauteilen 6 ein hier nicht näher dargestelltes Loch geformt. Hierzu wird die Schrauberwelle 12 mittels des Schrauberantriebs 22 mit hoher Drehzahl nₛ₁ angetrieben. Der Index s steht hierbei für die Drehzahl nₛ der Schrauberwelle 12. Gleichzeitig wird mittels des Vorschubantriebs 16 eine hohe Vorschubkraft F₁ ausgeübt. Diese liegt beispielsweise in einem Bereich von oberhalb von 1000N. Die hohe Drehzahl nₛ₁ liegt beispielsweise in einem Bereich zwischen 5000 U/min bis 8000 U/min. Nach Beendigung des Lochformvorgangs wird die Drehzahl nₛ auf eine niedrige Drehzahl nₛ₂ umgeschalten, welche lediglich noch bei 1000 bis 2500 U/min liegt. Auch wird gleichzeitig eine geringe Vorschubkraft F₂ eingestellt, die lediglich noch im Bereich bis 500N liegt. Zur rechtzeitigen Erkennung und schnellen Umschaltung wird im Ausführungsbeispiel der Motorstrom i überwacht. Bei einer charakteristischen Änderung des Werts des Motorstroms i wird dies als Ende des Lochformvorgangs und damit als Ende des ersten Prozessabschnitts I identifiziert und als Umschaltpunkt zum Umschalten herangezogen.

Die Fließlochschraube 4 ist hierfür speziell ausgebildet. Sie weist einen Schraubenkopf 30, einen daran anschließenden Gewindeschaft mit Gewinde 32 sowie eine endseitige, üblicherweise konische Spitze 34 auf. Die Spitze 34 ist dabei derart ausgebildet, dass bei der Lochformung lediglich ein plastisches Verformen und kein Zerspanungsvorgang erfolgt.

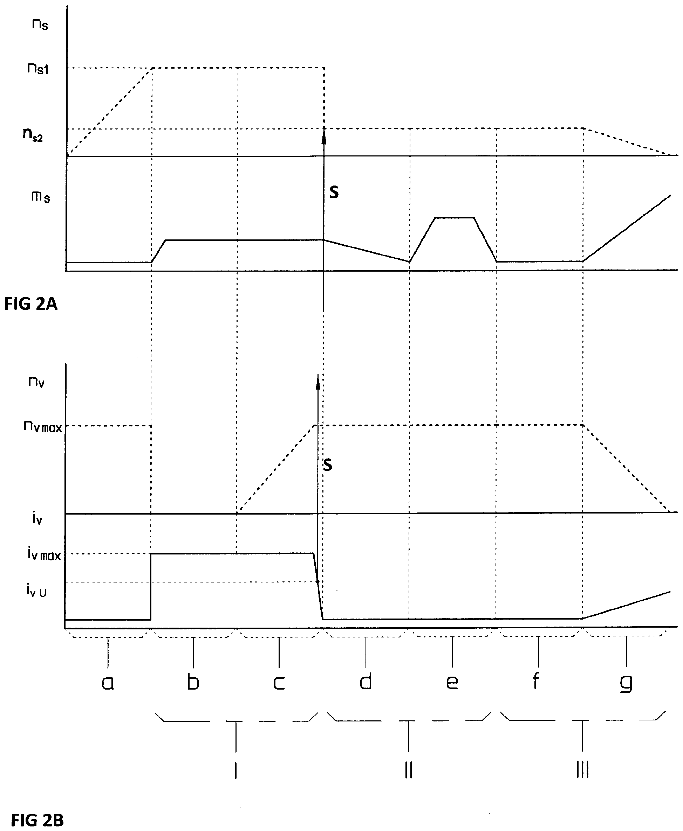

Die Verläufe von verschiedenen Antriebsparametern sowohl des Schrauberantriebs 22 als auch des Vorschubantriebs 16 sind in den Fig. 2A und 2B dargestellt, wobei die Fig. 2A die Antriebsparameter des Schrauberantriebs 22, also insbesondere des zweiten Elektromotors 24, und Fig. 2B wesentliche Antriebsparameter des Vorschubantriebs 16 und insbesondere des ersten Elektromotors 20 angeben. Die einzelnen Parameter des Vorschubantriebs 16 sind dabei mit dem Index "v" und die des Schrauberantriebs 22 mit dem Index "s" versehen. Der gesamte Fließlochschraubvorgang lässt sich in unterschiedliche Teilstufen wie folgt unterteilen:
a Zustellbewegung
b Erwärmung
c Durchdringen
d Formen eines Durchzugs
e Gewindeformen
f Ein- und Durchschrauben der Fließlochschraube 4
g Anziehen der Fließlochschraube 4

Die Teilstufen b und c bilden dabei den ersten Prozessabschnitt I, die Teilstufen d,e den zweiten Prozessabschnitt II. Die vorgelagerte Teilstufe des Zustellens sowie die nachgelagerten Teilstufen des Durchschraubens und Anziehens sind daher zusätzliche Prozessabschnitte im Laufe des gesamten Fließlochschraubvorgangs. Die Teilstufen f und g definieren dabei einen dritten Prozessabschnitt III des eigentlichen Verschraubens.

In der Fig. 2A ist die Drehzahl nₛ sowie das Drehmoment mₛ des zweiten Elektromotors 24 angetragen. In der Fig. 2B sind die Verläufe der Drehzahl nᵥ sowie des Motorstroms iᵥ des ersten Elektromotors 20 angetragen.

Betrachtet man zunächst den Verlauf der Antriebsparameter nᵥ, iᵥ des Vorschubantriebs 16, so ist folgendes erkennbar:
Während der Zustellbewegung erfolgt die Zustellung und damit die Vorschubgeschwindigkeit v mit konstanter Drehzahl nᵥ. Da keine wesentlichen Gegenkräfte zu überwinden sind, ist die Stromaufnahme vergleichsweise gering. Sobald die Fließlochschraube 4 auf das oberste Bauteil 6 auftrifft, ist die Vorschubgeschwindigkeit v null und entsprechend fällt die Drehzahl nᵥ auf null ab. Gleichzeitig springt die Stromaufnahme stufenartig auf einen Maximalwert lᵥₘₐₓ, welcher als Strombegrenzung hinterlegt ist. Über diesen Maximalwert iᵥₘₐₓ wird zugleich eine maximale Vorschubkraft Fmax definiert.

Seitens des Schrauberantriebs 22 wird zunächst die Drehzahl nₛ kontinuierlich auf eine hohe Drehzahl nₛ₁ hochgefahren, die zu Beginn der Teilstufe b erreicht ist. Zu Beginn der Teilstufe b, wenn also die Fließlochschraube 4 auf dem Bauteil 6 aufsitzt, steigt das Drehmoment mₛ bis auf einen konstanten Wert an, aufgrund des Widerstandes durch das Blech. Hierbei handelt es sich um einen reinen Reibwiderstand. Die hohe Drehzahl nₛ₁ sowie die hohe Vorschubkraft Fmax führen nun zu einem Erwärmen des Bauteils 6. Nach einer ausreichenden Erwärmung zum Ende der Teilstufe b verformt sich das Bauteil 6 plastisch und die Fließlochschraube 4 dringt in das Bauteil 6 ein. Es erfolgt also wieder eine Vorschubbewegung, so dass die Drehzahl nᵥ kontinuierlich ansteigt. Während dieser Teilstufe c des Durchdringens des Bauteils 6 bleibt der Motorstrom iᵥ auf einem hohen Niveau und die Drehzahl nₛ sowie auch das Drehmoment mₛ bleiben ebenfalls auf konstantem Niveau.

Gegen Ende der Teilstufe c erfolgt dann eine charakteristische Änderung des Motorstroms i, welche als Indiz für das endgültige Durchdringen gewertet wird. Der vom Bauteil 6 ausgeübte Widerstand lässt daher zum Ende des Durchdringens bereits nach und fällt unmittelbar danach ab. Hierdurch fällt der Motorstrom iᵥ abrupt ab. Dieser Abfall wird von der Steuereinheit 26 erfasst und ausgewertet. Gemäß einer ersten Variante wird dabei als Indiz für das Durchdringen die Veränderung des Motorstroms Δiᵥ/Δt erfasst und ausgewertet. Überschreitet die Veränderung Δiᵥ/Δt einen vorgegebenen Schwellwert, so wird dies als Umschaltkriterium gewertet zum Umschalten in den Prozessabschnitt II. Alternativ oder auch parallel hierzu wird als Umschaltkriterium eine Umschaltwert in vorgegeben, bei dessen Erreichen oder Unterschreiten das Umschalten veranlasst wird. Die Überwachung und Auswertung des Motorstroms iᵥ ist beispielsweise in den Vorschubantrieb 16 integriert, in diesen ist also beispielsweise ein Teil der Steuereinheit 26 integriert.

Beim Erreichen des Umschaltkriteriums wird ein Umschaltsignal S beispielsweise vom Vorschubantrieb 16 abgegeben, welches - aufgrund von Signallaufzeiten unter Umständen etwas zeitverzögert - an den Schrauberantrieb 22 übermittelt wird.

Die Steuereinheit 26 veranlasst also zu einem Umschaltzeitpunkt ein Umschalten der Drehzahl des Schrauberantriebs 22 auf eine reduzierte Drehzahl nₛ₂, die vorzugsweise über die Teilstufen d,e konstant ist. In der Teilstufe d wird durch ein plastisches Verformen ein Durchzug ausgebildet, d.h. es wird hierbei ein zylindrisches Loch geformt. Wegen der konischen Spitze der Fließlochschraube 4 ist am Ende der Teilstufe c unmittelbar beim Durchdringen zunächst noch kein zylindrisches Loch über die gesamte Bauteildicke ausgeformt. Dies erfolgt erst in der Teilstufe d. In der Teilstufe e des Gewindeformens wird anschließend nach der Ausformung des zylindrischen Lochs in dieses ein Gewinde mit Hilfe der Fließlochschraube 4 eingeformt.

Aufgrund der nachlassenden Gegenkraft bereits in Teilstufe c und darüber hinaus in der Teilstufe d nimmt die Drehzahl nᵥ des Vorschubantriebs 16 zunächst kontinuierlich zu, bis sie einen durch eine Begrenzung vorgegebenen Maximalwert nᵥₘₐₓ erreicht, welcher zu einer maximalen Vorschubgeschwindigkeit vₘₐₓ führt. Es handelt sich hierbei also um eine Begrenzung der Drehzahl nᵥ auf einen Maximalwert. Im Ausführungsbeispiel ist dieser identisch zu dem Maximalwert während der Zustellbewegung. Alternativ kann jedoch für die Zustellbewegung auch eine höhere Vorschubgeschwindigkeit v und damit eine höhere Drehzahl nᵥ zugelassen werden.

Die Drehzahl nᵥ verharrt auf diesem Maximalwert in der weiteren Teilstufe e und auch beim eigentlichen Einschraubvorgang während der Teilstufe f. Erst wenn die Fließlochschraube 4 die sogenannte Kopfauflage erreicht, bei der der Schraubenkopf 30 zum Aufliegen auf das Bauteil 6 kommt, fällt die Vorschubgeschwindigkeit v wieder auf null ab, bis also die Fließlochschraube angezogen ist. Während der Teilstufen d,e,f ist der Motorstrom i typischerweise konstant und nimmt erst wieder in der Teilstufe g zu.

Auf Seiten des Schrauberantriebs 22 wird während der Teilstufen d bis f die Drehzahl auf den konstanten geringeren Wert nₛ₂ gehalten. Der Schrauberantrieb 22 ist daher insbesondere drehzahlgeregelt und zwar über die beiden Prozessabschnitte I und II sowie ergänzend auch über die Teilstufe f hinweg. Beim Gewindeformen tritt wiederum ein höherer Widerstand für die Drehbewegung auf, so dass das Drehmoment mₛ ansteigt. Zum Ende des Gewindeformvorgangs fällt das Drehmoment mₛ wieder auf einen Minimalwert ab. In der letzten Teilstufe g, bei der die Fließlochschraube 4 angezogen wird, nimmt das Drehmoment mₛ wieder zu. Der Einschraubvorgang wird über die Regelung des Schrauberantriebs 22 geregelt und bei Erreichen eines Abschaltkriteriums, beispielsweise bei Erreichen eines vorbestimmten Drehmoments beendet. Der in der Fig. 2A dargestellte Drehmomentverlauf korreliert dabei allgemein zu einer Stromaufnahme des Schrauberantriebs 22.

Die hier beschriebenen Verläufe der verschiedenen Parameter ergeben sich zumindest in vergleichbarer Form auch bei einem Bohrschraubvorgang. Der charakteristische Verlauf beim Übergang von der Teilstufe c zur Teilstufe d bleibt erhalten, so dass in gleicher Weise ein Umschaltkriterium definierbar ist.

Alternativ zu der Verwendung eines Elektromotors 20 für den Vorschubantrieb 16 kann grundsätzlich auch ein Hydraulikantrieb herangezogen werden. Als Umschaltkriterium wird in diesem Fall eine charakteristische Veränderung und Abfall eines Drucks der Hydraulikflüssigkeit, insbesondere eines Hydrauliköls herangezogen. Eine Begrenzung der Vorschubgeschwindigkeit wird beispielsweise durch eine hydraulische Begrenzung der Zuflussmenge der Hydraulikflüssigkeit in einen entsprechenden Zylinder geregelt. Dies geschieht beispielsweise über eine hinsichtlich der Durchflussöffnung steuerbare Drossel. Die Begrenzung der maximalen Vorschubkraft wird in diesem Fall beispielsweise durch die Begrenzung des maximalen Öldrucks erreicht.

In der Fig. 1 sind die beiden Bauteile 6 durch die Klebschicht 8 voneinander getrennt. Dies wird dazu führen, dass bereits nach Durchdringen des ersten Bauteils 6 dies von der Steuereinheit 26 als Umschaltzeitpunkt identifiziert wird. Der Verlauf ist vergleichbar wie der in Fig. 2 dargestellte zwischen den Teilstufen c und d. Es erfolgt daher zunächst ein Umschalten in den Prozessabschnitt II, wie zuvor beschrieben wurde. In diesem Fall wird jedoch bei Auftreffen der Fließlochschraube 4 auf das zweite, untere Bauteil 6 die Drehzahl nᵥ wieder auf null abfallen und zudem wird der Motorstrom iᵥ wieder abrupt zunehmen. Dies erkennt die Steuereinheit 26 wieder als Beginn des ersten Prozessabschnitts I und wird daher wieder in diesen ersten Prozessabschnitt I umschalten. Ergänzend ist dabei in der Steuereinheit 26 weiterhin hinterlegt, dass dieser zweite Umschaltpunkt nur innerhalb eines vorgegebenen Fensters, beispielsweise Zeitintervall oder auch Wegintervall liegen darf. Andernfalls liegt ein Fehler vor.

**Bezugszeichenliste**

| | | | |
|---|---|---|---|
| 2 | Vorrichtung | F₁ | hohe Vorschubkraft |
| 4 | Fließlochschraube | F₂ | niedrige Vorschubkraft |
| 6 | Bauteil | iᵥ | Motorstrom des ersten Elektromotors |
| 8 | Klebschicht | | |
| 10 | Halterung | iᵥₘₐₓ | maximaler Motorstrom |
| 12 | Schrauberwelle | (i_{v U}) | Umschaltwert |
| 14 | Drehachse | nᵥ | Drehzahl des ersten Elektromotors |
| 16 | Vorschubantrieb | | |
| 18 | Axialrichtung | nᵥₘₐₓ | maximale Drehzahl des ersten Elektromotors |
| 20 | erster Elektromotor | | |
| 22 | Schrauberantrieb | nᵥ | Drehzahl des ersten Elektromotors |
| 24 | zweiter Elektromotor | | |
| 26 | Steuereinheit | nₛ | Drehzahl des zweiten Elektromotors |
| 30 | Schraubenkopf | | |
| 32 | Gewinde | mₛ | Drehmoment des zweiten Elektromotors |
| 34 | Spitze | | |
| | | nₛ₁ | hohe Drehzahl des zweiten Elektromotors / der Schrauberwelle |
| F | Vorschubkraft | | |
| Fₘₐₓ | maximale Vorschubkraft | nₛ₂ | reduzierte Drehzahl des zweiten Elektromotors / der Schrauberwelle |
| V | Vorschubgeschwindigkeit | | |
| Vₘₐx | maximale Vorschubgeschwindigkeit | | |
| | | S | Umschaltsignal |

## Patentansprüche

1. Verfahren zum Direktverschrauben von Bauteilen (6), insbesondere zum Fließlochschrauben, bei dem in einem ersten Prozessabschnitt (I) in einem Bauteil (6) ein Loch erzeugt wird und bei dem in einem zweiten Prozessabschnitt (II) in das erzeugte Loch ein Gewinde (32) eingeformt wird und hierzu
- mit Hilfe eines Vorschubantriebs (16) ein Vorschub sowie eine Vorschubkraft (F) erzeugt und auf eine Schrauberwelle (12) übertragen werden,
- die Schrauberwelle (12) in eine Drehbewegung versetzt wird, wobei
- in dem ersten Prozessabschnitt (I) eine hohe Drehzahl (nₛ₁) der Drehbewegung und mittels des Vorschubantriebs (16) eine hohe Vorschubkraft (F1) eingestellt und bei einem definierten Umschaltpunkt beim Durchdringen des Bauteils für den zweiten Prozessabschnitt (II) auf eine geringere Vorschubkraft (F2) und eine geringere Drehzahl (nₛ₂) umgeschaltet wird,
**dadurch gekennzeichnet,**
- **dass** die Vorschubkraft (F) mittels eines nicht pneumatischen Vorschubantriebs (16) erzeugt wird und
- **dass** ein mit der Vorschubkraft (F) zumindest korrelierter Parameter (iᵥ) überwacht wird und ein charakteristischer Wert (in) oder eine charakteristische Änderung des Werts des Parameters (iᵥ) den Umschaltpunkt definiert.

2. Verfahren nach Anspruch 1,
**dadurch gekennzeichnet,**
**dass** das Umschalten bereits unmittelbar beim Durchdringen des Bauteils (6) und vor Beginn des Einformens des Gewindes (32) erfolgt.

3. Verfahren nach einem der vorhergehenden Ansprüche,
**dadurch gekennzeichnet,**
**dass** nach dem Umschalten zunächst in einer Teilstufe (d) ein zylindrischer Durchzug geformt wird, bevor das Gewinde (32) geformt wird.

4. Verfahren nach einem der vorhergehenden Ansprüche,
**dadurch gekennzeichnet,**
**dass** der Parameter (iᵥ) ein Antriebsparameter des Vorschubantriebs (16) ist.

5. Verfahren nach einem der vorhergehenden Ansprüche,
**dadurch gekennzeichnet,**
**dass** der Vorschubantrieb (16) einen ersten Elektromotor (20) umfasst.

6. Verfahren nach dem vorhergehenden Anspruch,
**dadurch gekennzeichnet,**
**dass** als Parameter (iᵥ) eine Motorkenngröße überwacht wird.

7. Verfahren nach dem vorhergehenden Anspruch,
**dadurch gekennzeichnet,**
**dass** als Parameter (iᵥ) der Motorstrom des ersten Elektromotors (20) überwacht wird.

8. Verfahren nach einem der vorhergehenden Ansprüche,
**dadurch gekennzeichnet,**
**dass** für den Vorschubantrieb (16) eine maximale Vorschubgeschwindigkeit (vₘₐₓ) als Begrenzung vorgegeben ist.

9. Verfahren nach einem der vorhergehenden Ansprüche,
**dadurch gekennzeichnet,**
**dass** für den Vorschubantrieb (16) eine maximale Vorschubkraft (Fₘₐₓ) als Begrenzung vorgegeben ist.

10. Verfahren nach einem der beiden vorhergehenden Ansprüche,
bei dem die maximale Vorschubkraft (Fₘₐₓ) und/oder die maximale Vorschubgeschwindigkeit (vₘₐₓ) parametrierbar sind.

11. Verfahren nach einem der vorhergehenden Ansprüche,
**dadurch gekennzeichnet,**
**dass** während eines Fließlochschraubvorgangs unter vorgegebenen Bedingungen automatisch mehrfach zwischen erstem Prozessabschnitt (I) und zweitem Prozessabschnitt (II) umgeschaltet wird.

12. Verfahren nach dem vorhergehenden Anspruch,
bei dem bei einem charakteristischen Anstieg der Vorschubkraft (F) beim zweiten Prozessabschnitt (II) ein weiterer Umschaltpunkt definiert ist und wieder in den ersten Prozessabschnitt (I) mit der hohen Vorschubkraft (F1) umgeschaltet wird.

13. Verfahren nach einem der vorhergehenden Ansprüche,
**dadurch gekennzeichnet,**
**dass** die Schrauberwelle (12) mit Hilfe eines zusätzlichen Schrauberantriebs (22) in die Drehbewegung versetzt wird, wobei der Schrauberantrieb (22) einen zweiten Elektromotor (24) mit Steuerung für einen gesteuerten Schraubvorgang aufweist.

14. Verfahren nach einem der vorhergehenden Ansprüche,
**dadurch gekennzeichnet,**
**dass** im ersten Prozessabschnitt (I) eine Vorschubkraft (F) von größer 1000N und eine Drehzahl (nₛ) für die Schrauberwelle (12) im Bereich von 5000 U/min bis 8000 U/min erzeugt wird und im zweiten Prozessabschnitt (II) eine Vorschubkraft (F) im Bereich bis 500N sowie eine Drehzahl (nₛ) im Bereich von 500 bis 2500 U/min eingestellt wird.

15. Vorrichtung zum Direktverschrauben von Bauteilen (6), insbesondere zum Fließlochschrauben mit
- einer rotatorisch antreibbaren Schraubwelle (12), die in einer Axialrichtung (18) zur Ausübung eines Vorschubs versetzbar ist,
- einem Vorschubantrieb (16) zur Erzeugung eines Vorschubs und einer Vorschubkraft (F) sowie zu deren Übertragung auf die Schrauberwelle (12),
- einer Steuereinheit (26) zur Steuerung des Direktverschraubvorgangs, insbesondere des Fließlochschraubvorgangs, die derart ausgebildet ist, dass in einem ersten Prozessabschnitt (I) eine hohe Drehzahl der Schrauberwelle (12) und mittels des Vorschubantriebs (16) eine hohe Vorschubkraft (F1) eingestellt werden und bei einem definierten Umschaltpunkt für einen zweiten Prozessabschnitt (II) auf eine geringere Vorschubkraft (F2) und eine geringere Drehzahl (nₛ₂) umgeschaltet wird,
**dadurch gekennzeichnet,**
**dass** der Vorschubantrieb (16) nicht pneumatisch ist und dass die Steuereinheit (26) derart ausgebildet ist, dass sie einen mit der Vorschubkraft (F) zumindest korrelierten Parameter (iᵥ) überwacht und bei Erreichen eines charakteristischen Werts (i_{vU}) oder bei einer charakteristischen Änderung des Werts des Parameters (iᵥ) den Umschaltpunkt definiert.

## Claims

1. Method for directly screwing components (6), in particular flow hole screws, wherein, in a first process section (I), a hole is produced in a component (6) and wherein, in a second process section (II), a thread (32) is moulded into the produced hole and, to that end,
- a feed and a feed force (F) are produced by means of a feed drive (16) and transferred onto a screwdriver shaft (12),
- the screwdriver shaft (12) is shifted in a rotation movement, wherein
- in the first process section (I), a high rotational speed (nₛ₁) of the rotation movement and a high feed force (F1) is adjusted by means of the feed drive (16), and, at a defined switching point when penetrating the component for the second process step (II), switching to a smaller feed force (F2) and a smaller rotational speed (nₛ₂) occurs,
**characterised in that**
- the feed force (F) is produced by means of a non-pneumatic feed drive (16) and
- a parameter (iᵥ) at least correlating to the feed force (F) is monitored and a characteristic value (i_{Vu}) or a characteristic change of the value of the parameter (iᵥ) defines the switching point.

2. Method according to claim 1,
**characterised in that**
switching already takes place immediately when penetrating the component (6) and before beginning the moulding of the thread (32).

3. Method according to one of the preceding claims,
**characterised in that**
a cylindrical pull-through is shaped after switching, initially in a partial step (d), before the thread (32) is shaped.

4. Method according to one of the preceding claims,
**characterised in that**
the parameter (iᵥ) is a drive parameter of the feed drive (16).

5. Method according to one of the preceding claims,
**characterised in that**
the feed drive (16) comprises a first electromotor (20).

6. Method according to the preceding claim,
**characterised in that** a motor characteristic value is monitored as a parameter (iᵥ).

7. Method according to the preceding claim,
**characterised in that**
the motor current of the first electromotor (20) is monitored as a parameter (iᵥ).

8. Method according to one of the preceding claims,
**characterised in that**
a maximum feed speed (vₘₐₓ) for the feed drive (16) is predetermined as a limit.

9. Method according to one of the preceding claims,
**characterised in that**
a maximum feed force (Fₘₐₓ) for the feed drive (16) is predetermined as a limit.

10. Method according to one of the two preceding claims,
wherein the maximum feed force (Fₘₐₓ) and/or the maximum feed speed (vₘₐₓ) are able to be parameterised.

11. Method according to one of the preceding claims,
**characterised in that**
automatic switching between the first process section (I) and the second process section (II) occurs several times during the flow hole screwing process under predetermined conditions.

12. Method according to the preceding claim,
wherein, with a characteristic increase of the feed force (F) in the second process section (II), a further switching point is defined and switching into the first process section (I) with the high feed force (F1) occurs again.

13. Method according to one of the preceding claims,
**characterised in that**
the screwdriver shaft (12) is shifted into the rotation movement by means of an additional screwdriver drive (22), wherein the screwdriver drive (22) has a second electromotor (24) with controls for a controlled screwing process.

14. Method according to one of the preceding claims,
**characterised in that**,
in the first process section (I), a feed force (F) of greater than 1000N and a rotational speed (nₛ) for the screwdriver shaft (12) ranging from 5000 rpm to 8000 rpm is produced and, in the second process section (II), a feed force (F) in the region of up to 500N and a rotational speed (nₛ) ranging from 500 to 2500 rpm is used.

15. Device for directly screwing components (6), in particular for flow hole screws having
- a rotary drivable screw shaft (12) which is able to be shifted in an axial direction (18) for exerting a feed,
- a feed drive (16) for producing a feed and a feed force (F) and for transferring it to the screwdriver shaft (12),
- a control unit (26) for controlling the direct screwing process, in particular the flow hole screwing process, which is formed in such a way that, in a first process section (I), a high rotational speed of the screwdriver shaft (12) is adjusted and a high feed force (F1) by means of the feed drive (16), and at a defined switching point for a second process section (II), switching to a smaller feed force (F2) and a lower rotational speed (nₛ₂) occurs,
**characterised in that**
the feed drive (16) is not pneumatic and the control unit (26) is formed in such a way that it monitors a parameter (iᵥ) that at least correlates to the feed force (F) and when reaching a characteristic value (i_{vU}) or with a characteristic change of the value of the parameter (iᵥ), the switching point is defined.

## Revendications

1. Procédé pour l'assemblage par vissage direct de pièces (6), notamment pour le vissage par fluo-perçage, d'après lequel lors d'une première phase de processus (I), un trou est réalisé dans une pièce (6), et d'après lequel lors d'une deuxième phase de processus (II), un taraudage (32) est réalisé par formage dans le trou ayant été réalisé auparavant, et à cet effet
- une avance ainsi qu'une force d'avance (F) sont produites à l'aide d'un entrainement d'avance (16), et sont transmises à un arbre de visseuse (12),
- l'arbre de visseuse (12) est mis en un mouvement de rotation, et
- lors de la première phase de processus (I), on règle une vitesse de rotation élevée (nₛ₁) du mouvement de rotation, et, au moyen de l'entraînement d'avance (16), une force d'avance élevée (F1), puis à partir d'un point de commutation défini, lors de la traversée de la pièce, on commute, pour la deuxième phase de processus (II), vers une force d'avance moindre (F2) et une vitesse de rotation moindre (nₛ₂),
**caractérisé**
- **en ce que** la force d'avance (F) est produite au moyen d'un entrainement d'avance (16) non pneumatique, et
- **en ce que** l'on surveille un paramètre (iᵥ) au moins corrélé avec la force d'avance (F), et une valeur caractéristique (i_{vU}) ou une variation caractéristique de la valeur du paramètre (iᵥ) définissant le point de commutation.

2. Procédé selon la revendication 1,
**caractérisé**
**en ce que** la commutation s'effectue directement dès la traversée de la pièce (6) et avant le début du formage du taraudage (32).

3. Procédé selon l'une des revendications précédentes,
**caractérisé**
**en ce qu'**après la commutation, on forme tout d'abord, au cours d'une étape partielle (d), une traversée cylindrique avant de former le taraudage (32).

4. Procédé selon l'une des revendications précédentes,
**caractérisé**
**en ce que** le paramètre (iᵥ) est un paramètre d'entrainement de l'entrainement d'avance (16).

5. Procédé selon l'une des revendications précédentes,
**caractérisé**
**en ce que** l'entrainement d'avance (16) comprend un premier moteur électrique (20).

6. Procédé selon la revendication précédente,
**caractérisé**
**en ce que** l'on surveille une grandeur caractéristique de moteur en tant que paramètre (iᵥ).

7. Procédé selon la revendication précédente,
**caractérisé**
**en ce que** l'on surveille le courant moteur du premier moteur électrique (20) en tant que paramètre (iᵥ).

8. Procédé selon l'une des revendications précédentes,
**caractérisé**
**en ce qu'**une vitesse d'avance maximale (vₘₐₓ) est prescrite en tant que limite pour l'entrainement d'avance (16).

9. Procédé selon l'une des revendications précédentes,
**caractérisé**
**en ce qu'**une force d'avance maximale (Fmax) est prescrite en tant que limite pour l'entrainement d'avance (16).

10. Procédé selon l'une des deux revendications précédentes,
d'après lequel la force d'avance maximale (Fmax) et/ou la vitesse d'avance maximale (vₘₐₓ) sont paramétrables.

11. Procédé selon l'une des revendications précédentes,
**caractérisé**
**en ce que** pendant l'opération de vissage par fluo-perçage, sous des conditions prédéterminées, une commutation est effectuée de manière automatique et multiple entre la première phase de processus (I) et la deuxième phase de processus (II).

12. Procédé selon la revendication précédente,
d'après lequel dans le cas d'un accroissement caractéristique de la force d'avance (F) lors de la deuxième phase de processus (II), un autre point de commutation est défini, et on commute à nouveau vers la première phase de processus (I) avec la force d'avance élevée (F1).

13. Procédé selon l'une des revendications précédentes,
**caractérisé**
**en ce que** l'on confère à l'arbre de visseuse (12) le mouvement de rotation à l'aide d'un entraînement de visseuse supplémentaire (22), l'entraînement de visseuse (22) comprenant un deuxième moteur électrique (24) avec une commande pour une opération de vissage commandée.

14. Procédé selon l'une des revendications précédentes,
**caractérisé**
**en ce que** dans la première phase de processus (I), on produit une force d'avance (F) de plus de 1000N et une vitesse de rotation (nₛ) pour l'arbre de visseuse (12) dans une plage de 5000 t/min à 8000 t/min, et dans la deuxième phase de processus (II), on règle une force d'avance (F) dans une plage allant jusqu'à 500N ainsi qu'une vitesse de rotation (nₛ) dans une plage de 500 à 2500 t/min.

15. Dispositif pour l'assemblage par vissage direct de pièces (6), notamment pour le vissage par fluo-perçage, comprenant
- un arbre de vissage (12), qui peut être entrainé en rotation et peut être déplacé dans une direction axiale (18) pour l'exécution d'une avance,
- un entrainement d'avance (16) pour produire une avance et une force d'avance (F) ainsi que son transfert à l'arbre de visseuse (12),
- une unité de commande (26) pour commander l'opération d'assemblage par vissage direct, notamment l'opération de vissage par fluo-perçage, qui est configurée de manière à régler, lors d'une première phase de processus (I), une vitesse de rotation élevée de l'arbre de visseuse (12), et, au moyen de l'entrainement d'avance (16), une force d'avance élevée (F1), et de manière à assurer, en un point de commutation défini pour une deuxième phase de processus (II), une commutation vers une force d'avance moindre (F2) et une vitesse de rotation moindre (nₛ₂),
**caractérisé**
**en ce que** l'entraînement d'avance (16) n'est pas pneumatique, et en ce que l'unité de commande (26) est configurée de manière à surveiller un paramètre (iᵥ) au moins corrélé avec la force d'avance (F), et de manière à définir le point de commutation lorsqu'une valeur caractéristique (i_{vU}) est atteinte ou lors d'une variation caractéristique de la valeur du paramètre (iᵥ).
